(19) Europäisches Patentamt
European Patent Office
Office européen des brevets

(11) Numéro de publication: 0 252 835 B1

# (12) FASCICULE DE BREVET EUROPEEN

(45) Date de publication du fascicule du brevet: **07.11.90**

(51) Int. Cl.⁵: **C01B 17/02**

(21) Numéro de dépôt: **87401582.9**

(22) Date de dépôt: **07.07.87**

(54) **Procédé pour l'élimination rapide de l'hydrogène sulfuré contenu dans le soufre liquide et système catalytique utilisable pour sa mise en oeuvre.**

(30) Priorité: **10.07.86 FR 8610063**

(43) Date de publication de la demande: **13.01.88 Bulletin 88/2**

(45) Mention de la délivrance du brevet: **07.11.90 Bulletin 90/45**

(84) Etats contractants désignés: **AT BE CH DE ES GB GR IT LI NL SE**

(56) Documents cités: **EP-A- 0 200 147**

(73) Titulaire: **SOCIETE NATIONALE ELF AQUITAINE (PRODUCTION), Tour Elf 2, Place de la Coupole La Défense 6, F-92400 Courbevoie(FR)**

(72) Inventeur: **Maurice, Jacques, 103 Avenue de Trespoey, F-64000 Pau(FR)**
Inventeur: **Fouque, Romain, Rue du Village Cidex 29 C., F-64230 Poey De Lescar(FR)**
Inventeur: **Auriol, Jean-Louis, 6, rue Auguste Renoir, F-64000 Pau(FR)**

(74) Mandataire: **Boillot, Marc, SOCIETE NATIONALE ELF AQUITAINE Division Propriété Industrielle Tour Elf, F-92078 Paris la Défense Cédex 45(FR)**

EP 0 252 835 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention a trait a un procédé pour l'élimination rapide de l'$H_2S$ présent dans le soufre liquide à l'état simplement dissous et à l'état combiné de polysulfures d'hydrogène, ledit procédé faisant appel à un système catalytique spécifique. Elle concerne encore une composition formée d'un mélange, d'une part, de soufre liquide renfermant de l'$H_2S$ a l'état simplement dissous et à l'état combiné de polysulfure d'hydrogène et, d'autre part, dudit systeme catalytique.

Des tonnages importants de soufre sont produits par le procédé CLAUS, qui consiste à faire réagir de l'hydrogène sulfuré, provenant par exemple de la désacidification de gaz naturels ou de traitements de produits pétroliers, sur de l'anhydride sulfureux, formé par exemple par combustion d'$H_2S$ ou encore par combustion de soufre ou de composés soufrés divers et notamment de pyrites, suivant le schéma réactionnel:

$2H_2S+SO_2 \rightleftharpoons 3S+2H_2O$

Une fraction substantielle du soufre produit par le procédé CLAUS est recueillie et stockée à l'état liquide dans des fosses calorifugées, puis transportée sous forme liquide jusqu'aux points d'utilisation en faisant appel à des moyens de transport tels que camions-citernes, bateaux-citernes, wagons-citernes ou encore pipelines, qui sont pourvus de moyens appropriés de calorifugeage permettant au soufre de rester à l'état liquide au cours du transport.

Le soufre liquide obtenu par le procédé CLAUS renferme toujours à l'état dissous une petite quantité d'$H_2S$ et de polysulfures d'hydrogène, encore appelés sulfanes, de formule $H_2S_X$ dans laquelle x représente un nombre égal ou supérieur à 2, lesdits sulfanes se décomposant lentement dans le temps en libérant $H_2S$.

La phase gazeuse surmontant le soufre liquide se trouvant dans la fosse de stockage ou dans le conteneur utilisé pour son transport renferme donc une certaine proportion d'$H_2S$, ce qui, du fait de la toxicité de ce gaz et de sa tendance à l'inflammation spontanée, rend dangereuses les opérations liées au chargement et au déchargement des conteneurs servant au transport du soufre liquide. Pour que ces opérations puissent se faire dans des conditions satisfaisantes de sécurité pour le personnel opérateur, on soumet généralement le soufre liquide CLAUS, préalablement auxdites opérations, à un traitement, dit traitement de dégazage, dont le but est d'abaisser la teneur en $H_2S$ libre et combiné dudit soufre liquide en-dessous d'un seuil que la pratique fixe à 10 ppm.

La quantité globale d'$H_2S$ et de sulfanes dans le soufre liquide CLAUS est en général comprise entre 50 et 700 ppm et dépend essentiellement de la concentration en $H_2S$ de la phase gazeuse surmontant le soufre liquide et de la température de ce dernier. De plus les proportions relatives d'$H_2S$ libre et de sulfanes dissous dans le soufre liquide dépendent aussi de la température de celui-ci.

Le processus d'élimination de l'$H_2S$ présent dans le soufre liquide sous les formes libre et combinée comporte deux phases, à savoir une phase de décomposition des sulfanes les plus lourds en $H_2S$ et soufre suivant la réaction $H_2S_X \rightarrow H_2S + S_{x-1}$, et une phase d'extraction et/ou de transformation in situ en soufre de l'$H_2S$ libéré et simplement dissous et des sulfanes légers.

La décomposition des sulfanes en $H_2S$ et soufre est une réaction lente, ce qui implique que la vitesse d'élimination de l'$H_2S$ est limitée par la vitesse de cette réaction de décomposition.

La plupart des procédés proposés pour éliminer l'$H_2S$ libre et combiné contenu en solution dans le soufre liquide sont du type dans lequel on incorpore au soufre liquide un système catalytique formé d'un ou plusieurs composés consistant en ammoniac ou composés libérant de l'ammoniac ou encore en composés ayant un caractère basique au sens de BRONSTEDT, de manière à faciliter la décomposition des sulfanes, l'$H_2S$ libéré simplement dissous étant soit extrait du soufre liquide par toute technique permettant à l'$H_2S$ dissous physiquement de s'échapper du soufre liquide soit transformé in situ en soufre sous l'action d'un gaz oxydant. En particulier, dans le procédé de la citation EP-B 0 045 636, on décrit l'utilisation d'un système catalytique consistant en un composé choisi parmi les composés inorganiques du phosphore, l'urée, les dérivés de l'urée, les dithionates, les dithionites, les thiosulfates, les bisulfures et les bisulfites. Dans les procédés décrits dans les citations US-A 3 364 655, FR-A 2 159 691 et US-A 4 131 437, on emploie l'ammoniac comme système catalytique et on extrait l'$H_2S$ libéré par décomposition des sulfanes par pulvérisation du soufre liquide (US-A 3 364 655), par stripage par un gaz inerte (FR-A 2 159 691) ou par balayage de la surface libre du soufre liquide au moyen d'un gaz tel que vapeur d'eau, azote, air, gaz résiduaire d'usines à soufre (US-A 4 131 437). L'utilisation d'un système catalytique du type ammoniac, sels d'ammonium, amines et autres composés azotés est encore proposée dans les citations FR-A 2 185 587 et US-A 3 447 903 avec transformation in situ en soufre de l'$H_2S$ libéré par décomposition des sulfanes par action d'un gaz oxydant, à savoir l'air dans le premier cas et $SO_2$ dans le second cas, injecté dans le soufre liquide.

Les procédés précités présentent l'inconvénient d'avoir une cinétique lente, ce qui empêche notamment une mise en oeuvre substantiellement continue à la sortie directe des unités de fabrication de soufre. En effet, dans de tels procédés il faut plusieurs heures, par exemple au moins 2,5 heures en utilisant un système catalytique formé de composés tels que définis dans EP-B 0 045 636 ou encore au moins 5 à 8 heures lorsque l'on fait appel à l'ammoniac comme système catalytique, pour obtenir un soufre liquide renfermant une teneur en $H_2S$ libre et combiné inférieure au seuil fixé par la pratique.

On a maintenant trouvé que l'on pouvait améliorer l'activité des composés à caractère basique utilisés comme systèmes catalytiques dans les procédés d'élimination de l'$H_2S$ libre et combiné présent dans le soufre liquide, en leur adjoignant un ou plusieurs composés tensio-actifs. Ceci permet de réduire très fortement la durée de traitement du soufre liquide et ainsi de remédier à l'inconvénient précité. En outre, la quantité de système catalytique ainsi modifié, qui est nécessaire pour amener la teneur en $H_2S$ du soufre liquide à la valeur désirée, inférieure au seuil fixé par la pratique, est suffisamment faible pour pratiquement ne pas augmenter la teneur en cendres du soufre traité.

L'invention a donc pour objet un procédé d'élimination rapide de l'$H_2S$ présent dans le soufre liquide à l'état simplement dissous et à l'état combiné de polysulfures d'hydrogène, qui est du type dans lequel on incorpore au soufre liquide un système catalytique renfermant un ou plusieurs composés à caractère basique et l'on maintient le tout dans des conditions propres à évacuer l'hydrogène sulfuré hors du soufre liquide et se caractérise en ce que ledit système catalytique inclut également un ou plusieurs composés tensio-actifs.

Les composantes du sytème catalytique incorporé au soufre liquide, à savoir la composante consistant en le ou les composés à caractère basique et la composante formée du ou des composés tensioactifs, peuvent être ajoutées au soufre liquide soit séparément soit sous la forme d'un mélange préformé.

Dans une forme préférée de mise en oeuvre du procédé suivant l'invention, le système catalytique incorporé au soufre liquide consiste en un ou plusieurs composés, qui chacun ont un caractère basique et sont doués de propriétés tensio-actives.

La quantité de système catalytique ajoutée au soufre liquide doit d'une part être suffisante pour obtenir une élimination rapide et satisfaisante de l'$H_2S$ et d'autre part ne pas être trop importante pour ne pas augmenter le taux de cendres du soufre liquide. Avantageusement les quantités de système catalytique ajoutées au soufre liquide sont comprises entre environ 0,5 et 60 ppm.

Lorsque le système catalytique incorporé au soufre liquide est du type bicomposante, le ou les composés à caractère basique constituant l'une des composantes dudit système catalytique peuvent être choisis parmi les divers composés qui ont un caractère basique au sens de BRONSTEDT et sont stables dans le soufre liquide à la température de l'opération ou se transforment à cette température en un composé basique stable. En particulier les composés à caractère basique peuvent être des hydroxydes de métaux alcalins ou de métaux alcalins-terreux comme la soude ou la potasse, des composés tels que l'ammoniac, l'hydrazine, l'hydroxylamine, des amines aliphatiques ou cycliques du type primaire, secondaire ou tertiaire, des composés tels que l'urée ou la thiourée et leurs dérivés, des composés hétérocycliques à cartactère basique, des sels d'acides faibles et de bases fortes, des composés azotés quaternaires se décomposant aux températures opératoires pour donner de l'ammoniac ou une amine. Les composés à caractère basique définis comme catalyseurs dans les citations EP-B-0045636 et US-A-3 447 903 peuvent notamment être utilisés pour constituer la composante à caractère basique du système catalytique utilisé suivant l'invention.

Conviennent également pour former la composante à caractère basique, les composés hétérocycliques, monocycliques et polycycliques, qui renferment un ou plusieurs hétéroatomes consistant en atomes d'azote et éventuellement un ou plusieurs autres hétéroatomes, notamment soufre et/ou oxygène, et qui sont solubles et stables dans le soufre liquide aux températures de traitement et présentent un point d'ébullition supérieur à 200°C à la pression atmosphérique, lesdits composés hétérocycliques étant proposés comme catalyseurs pour l'élimination de l'$H_2S$ contenu dans le soufre liquide dans une demande de brevet (EP-A 0 252 836) déposée par la demanderesse en même temps que la présente demande de brevet et incluant, à titre d'exemples, les hétérocycles tels que quinoléine, isoquinoléine, benzoquinoléines, acridine, benzacridine, quinoxaline, quinazoline, phénazine, phénantridine, phénantrolines, naphtyridines et bipyridyles.

Les composés tensioactifs, qui sont utilisables pour former la composante tensioactive du système catalytique bicomposante, peuvent être des composés tensioactifs anioniques, non-ioniques, cationiques ou même amphotères. On peut notamment former la composante tensioactive du système catalytique bicomposante en utilisant un ou plusieurs composés tensioactifs choisis parmi les composés tensioactifs n'ayant pas ou pratiqumeent pas de caractère basique comme les composés tensioactifs anioniques ou non-ioniques et en particulier parmi les mercaptans oxyéthylénés, les phénols oxyéthylénés, les esters de polyéthylène glycol, les dérivés des oxyalcoylamides et les polyéthoxyesters des corps gras ou encore en faisant appel à un ou plusieurs composés tensioactifs cationiques, c'est-à-dire à des composés tensioactifs ayant un certain caractère basique.

La composante à caractère basique et la composante tensioactive, dont l'association forme le système catalytique bicomposante incorporé au soufre liquide sont utilisée en proportions telles que la quantité de composante à caractère basique représente avantageusement 0,05 à 50 % et de préférence 0,2 à 20 % du poids total desdites composantes.

Lorsque le système catalytique incorporé au soufre liquide est monocomposante, c'est-à-dire formé d'un ou plusieurs composés ayant chacun à la fois un caractère basique et des propriété tensioactives, ledit système catalytique est avantageusement constitué d'un ou plusieurs composés choisis parmi les composés tensioactifs aminés et notamment parmi les amines grasses, les alcoylènediamines grasses, les sels et en particulier les chlorhydrates et carboxylates de telles amines et diamines grasses, les dérivés oxyalcoylénés de ces amines et diamines grasses et de leurs sels, les composés d'ammonium quaternaire à chaînes grasses et les sels de benzalconium.

Parmi ces composés tensioactifs aminés conviennent plus spécialement :

- les amines grasses de formule

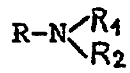

et leurs sels, notamment chlorhydrates et carboxylates,

- les alcoylènediamines à chaînes grasses de formule $R\text{-}NH\text{-}(C_mH_{2m})\text{-}NH_2$ et leurs sels, notamment chlorhydrates et carboxylates,

– les dérivés oxyalcoylénés d'amines grasses et d'alcoylènediamines grasses de formules respectives

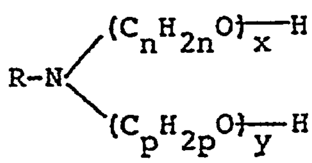

et

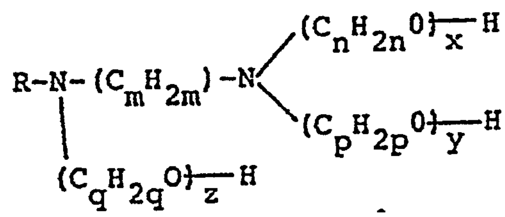

– les composés d'ammonium quaternaires à chaînes grasses de formule

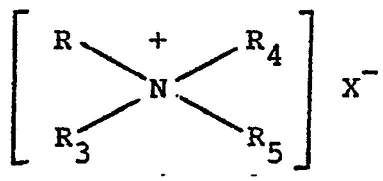

, et

– les sels de benzalconium de formule

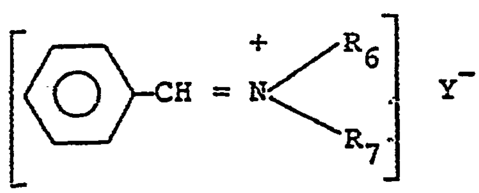

avec dans ces formules R représentant un radical alcoyle ou alcényle en $C_8$ à $C_{22}$, $R_1$ et $R_2$, identiques ou différents, désignant chacun un radical R, un atome d'hydrogène ou un radical alcoyle en $C_1$ à $C_4$, $R_3$, $R_4$ et $R_5$, identiques ou différents, représentant chacun un radical R ou un radical alcoyle en $C_1$ à $C_4$, $R_6$ et $R_7$, identiques ou différents, désignant un radical alcoyle en $C_1$ à $C_4$, m, n, p et q représentant des nombres-entiers allant de 1 à 4, x, y et z étant des nombres allant chacun de 1 à 10, et $X^-$ et $Y^-$ designant des anions salifiants, notamment $C1^-$ ou carboxylates et par exemple acétate.

Les dérivés oxyalcoylénés d'amines grasses et d'alcoylène-diamines grasses sont de préférence ceux répondant aux formules

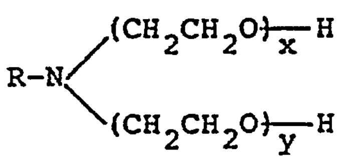

et

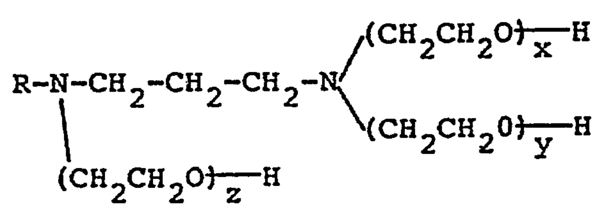

dans lesquelles R, x, y et z ont les significations données ci-dessus.

Les températures pour la mise en oeuvre du procédé suivant l'invention peuvent varier assez largement au-dessus du point de fusion du soufre et par exemple être situées entre 125°C et 180°C. De préférence, on opère à des températures allant de 130°C à 165°C.

Le procédé suivant l'invention doit être mis en oeuvre dans des conditions qui assurent une distribution aussi homogène que possible du système catalytique dans la masse du soufre liquide et permettent également d'évacuer hors de ladite masse l'hydrogène sulfuré libéré par décomposition des sulfanes et présent à l'état dissous dans le soufre liquide. Pour ce faire, on peut soumettre le soufre liquide contenant le système catalytique à une agitation, en faisant appel à tout système mécanique approprié d'agitation, l'$H_2S$ libéré s'échappant naturellement hors de la masse du soufre liquide. On peut encore réaliser l'agitation du soufre liquide et l'entraînement de l'$H_2S$ libéré par stripage au moyen d'un gaz inerte, c'est-à-dire suivant l'invention sans action sur les constituant du milieu dans lequel il est introduit dans les conditions de température choisies pour la mise en oeuvre du procédé, ledit gaz de stripage pouvant être notamment tel qu'azote, $CO_2$, air, vapeur d'eau, gaz résiduaire d'usine à soufre ou mélanges de tels gaz. On peut également effectuer l'agitation du soufre liquide renfermant le système catalytique et l'évacuation de l'$H_2S$ libéré en soumettant le soufre liquide à une pulvérisation comme décrit par exemple dans la citation US-A-3 364 655. Si besoin est on peut encore opérer en utilisant une combinaison de ces différents modes d'agitation du soufre liquide et d'évacuation de l'$H_2S$ libéré.

Le traitement du soufre liquide incluant l'une ou l'autre ou une combinaison des opérations d'agitation précitées est généralement mis en oeuvre dans l'enceinte calorifugée, par exemple fosse ou réservoir métallique, dans laquelle ledit soufre liquide est stocké, et il est recommandé d'effectuer un balayage de l'espace surmontant la surface libre du soufre liquide au moyen d'un gaz inerte tel que $CO_2$, azote, air, gaz résiduaire d'usine à soufre CLAUS, pour évacuer l'$H_2S$, généralement vers une zone d'incinération, et faciliter ainsi l'entraînement de l'$H_2S$, libéré par décomposition des sulfanes, hors de la masse de soufre liquide. Lorsque ledit balayage est réalisé à l'aide d'un gaz résiduaire d'usine à soufre, c'est-à-dire d'un gaz renfermant encore une petite quantité d'$H_2S$, il faut contrôler ladite quantité, par exemple par dilution du gaz résiduaire avec un gaz inerte, de manière à ce qu'elle ne soit pas supérieure, au moins vers la fin de l'opération, à la teneur en $H_2S$ gazeux en équilibre, à la température de l'opération, avec la quantité d'$H_2S$ que l'on tolère dans le soufre liquide.

L'addition du système catalytique au soufre liquide peut être réalisée en une seule fois au début de l'opération ou par fractions tout au long de l'opération. Lorsque le traitement d'élimination de l'$H_2S$ comporte une agitation mécanique du soufre liquide contenu dans l'enceinte, fosse ou réservoir métallique, dans laquelle il est stocké, le système catalytique peut être ajouté dans l'alimentation en soufre liquide de l'enceinte servant au traitement. Si un stripage est envisagé pour évacuer l'$H_2S$ hors de la masse de soufre liquide, le système catalytique peut être amené dans le gaz de stripage et/ou ajouté dans l'alimentation en soufre liquide de l'enceinte de traitement. Dans le cas où l'on réalise une pulvérisation du soufre liquide, une telle pulvérisation comportant généralement l'amenée du soufre liquide à une buse de pulvérisation au moyen d'une pompe comportant un conduit d'aspiration plongeant dans le soufre liquide, le système catalytique peut être injecté à l'aspiration ou au refoulement de la pompe ou/et dans l'alimentation en soufre liquide de l'enceinte de traitement.

Le procédé suivant l'invention peut être mis en oeuvre en opérant en discontinu ou en continu.

Les figures 1 et 2 du dessin annexé représentent schématiquement deux dispositifs utilisables pour la mise en oeuvre du procédé suivant l'invention.

Une mise en oeuvre en discontinu du procédé suivant l'invention avec pulvérisation du soufre liquide renfermant le système catalytique peut être effectuée par exemple, comme le montre la figure 1, en opérant dans une enceinte 1 fermée calorifugée, notamment une fosse ou un réservoir métallique, divisée en deux compartiments, à savoir un premier compartiment 2 de faible volume et un deuxième compartiment 3 de volume important, par une cloison 4 ouverte à la partie supérieure de manière à former un trop plein permettant au soufre liquide de s'écouler du premier dans le deuxième compartiment. Le fond 5 du premier compartiment est surélevé par rapport à celui 6 du deuxième compartiment. L'enceinte est munie d'une amenée 7 de gaz de balayage débouchant dans le premier compartiment au-dessus du niveau du trop-plein et d'une sortie 8 de gaz de balayage prévue dans la partie supérieure du deuxième compartiment. En outre, le premier compartiment est d'une part muni d'un conduit 9 d'amenée du soufre liquide, ledit conduit portant une dérivation 10 pour l'addition du système catalytique, et d'autre part équipé de moyens mécaniques 11 d'agitation et le deuxième compartiment est équipé d'un système 12 de pulvérisation comportant une pompe 13 dont le conduit d'aspiration 14 est disposé pour plonger dans le soufre liquide et le refoulement 15 est connecté à une buse 16 de pulvérisation disposée dans ledit deuxième compartiment de manière à être située au-dessus de la surface libre 17 du soufre liquide contenu dans ce compartiment.

Dans une telle mise en oeuvre, le soufre liquide renfermant le système catalytique est soumis à une forte agitation dans le premier compartiment 2, ce qui conduit à réaliser une distribution homogène dudit système catalytique dans le soufre liquide contenu dans ledit compartiment et à initier la réaction de décomposition des sulfanes, puis le mélange de soufre liquide et de système catalytique s'écoule par le trop-plein 4 dans le deuxième compartiment 3, dans lequel ledit mélange est soumis à une pulvérisation. L'$H_2S$ s'échappant hors de la masse de soufre liquide contenue dans les deux compartiments est évacué par circulation du gaz de balayage, par exemple un gaz résiduaire d'usine à soufre CLAUS, et dirigé avec ce gaz vers une zone d'incinération.

Une mise en oeuvre en continu du procédé suivant l'invention avec pulvérisation du soufre liquide renfermant le système catalytique, peut être effectuée par exemple, comme le montre la figure 2 en opérant dans une enceinte 20 fermée calorifugée, par exemple un réservoir métallique calorifugé, divisée en au moins trois compartiments successifs, à savoir un compartiment d'entrée 21, un ou plusieurs compartiments intermédiaires 31 et un compartiment de sortie 41, par des partitions verticales parallèles 22 et 32 qui sont ouvertes à la partie inférieure pour mettre en communication chacun des compartiments avec les compartiments qui lui sont adjacents et dont la hauteur est inférieure à celle de l'enceinte de manière à pouvoir, le cas échéant, jouer un rôle de trop-plein pour le soufre liquide. Le compartiment d'entrée 21 est d'une part pourvu d'un conduit 23 d'amenée du soufre liquide portant en dérivation un conduit 24 pour l'addition du système catalytique et, à sa partie supérieure, d'une sortie 25 pour un gaz de balayage et d'autre part il est équipé d'un système mécanique d'agitation 26. En outre, chacun des compartiments 31 intermédiaire(s) et de sortie 41 est équipé d'un système de pulvérisation 33 et 43, ledit système comportant une pompe 34 et 44 munie d'une part d'un conduit d'aspiration 35 et 45 disposé pour plonger dans le soufre liquide dans la partie aval du compartiment concerné et d'autre part d'un conduit de refoulement 36 et 46 connecté à une buse de pulvérisation 37 et 47 placée dans ledit compartiment de manière à être disposée dans la partie amont de ce compartiment au-dessus de la surface libre 30 du soufre liquide qu'il renferme. De plus le compartiment 41 de sortie est muni d'une amenée 48 pour un gaz de balayage arrangée au-dessus de la surface libre 30 du soufre liquide et la pompe du système de pulvérisation équipant ledit compartiment de sortie comporte en dérivation un conduit 49 servant à prélever le soufre liquide traité.

Dans une telle mise en oeuvre, le soufre liquide additionné du système catalytique arrive en continu dans le compartiment 21 d'entrée et s'y trouve soumis à une forte agitation, ce qui conduit à réaliser une distribution homogène du système catalytique dans le soufre liquide contenu dans ledit compartiment et à initier ainsi la réaction de décomposition des sulfanes, puis le mélange de soufre liquide et de système catalytique s'écoule en continu successivement dans le ou les compartiments intermédiaires 31 puis dans le compartiment 41 de sortie, dans chacun desquels ledit mélange est soumis à une pulvérisation. L'$H_2S$ s'échappant hors de la masse de soufre liquide contenue dans les divers compartiments est évacué en continu de l'enceinte en mélange avec le gaz de balayage, par exemple un gaz résiduaire d'usine à soufre CLAUS, qui est injecté dans le compartiment 41 de sortie et circule au-dessus de la surface libre 30 du soufre liquide à contre-courant de ce dernier puis sort de l'enceinte par la sortie 25 prévue à cet effet dans le compartiment d'entrée 21, le gaz de balayage chargé d'$H_2S$ étant ensuite dirigé vers une zone d'incinération. Le soufre liquide traité est soutiré en continu par le conduit 49 monté sur la pompe 44 du système de pulvérisation 43, qui équipe le compartiment 41 de sortie de l'enceinte 20.

A titre de variante, l'opération de pulvérisation du mélange de soufre liquide et de système catalytique prévue dans la mise en oeuvre en discontinu ou l'une au moins des opérations de pulvérisation prévues dans la mise en oeuvre en continu peut être remplacée par une opération de stripage de l'$H_2S$ à l'aide d'un gaz inerte injecté dans le soufre liquide contenu dans le ou les compartiments concernés de l'enceinte de traitement.

En outre, dans le dispositif de la figure 1, le compartiment 2 peut être supprimé, le soufre liquide et le système catalytique étant introduits directement dans le compartiment 3, qui constitue alors l'unique compartiment de l'enceinte.

Comme indiqué plus haut, l'invention concerne encore une composition formée d'un mélange, d'une part, de soufre liquide renfermant $H_2S$ à l'état simplement dissous et part, du système catalyque utilisé dans le procédé selon l'invention.

L'invention est illustrée par les exemples suivants donnés à titre non limitatif.

EXEMPLES 1 à 4:

Dans ces exemples, qui constituent des exemples témoins, on effectuait l'élimination de l'$H_2S$ contenu dans du soufre liquide provenant d'une unité à soufre CLAUS, en opérant soit en l'absence de catalyseur (exemple 1) ou en présence d'un catalyseur consistant en hydroxyde de sodium en solution à 3% dans le n-décanol (exemple 2) ou en ammonicac (exemple 4) ou encore en présence seulement d'un composé tensioactif sans caractère basique, à savoir le tertiododécylmercaptan oxyéthyléné renfermant 7 motifs d'oxyde déthylène (exemple 3).

On opérait dans un ballon de verre maintenu à température constante dans un bain d'huile thermostaté. Le ballon était muni d'une première tubulure, dans laquelle passait un tube plongeur en verre pour l'introduction d'un gaz de stripage, d'une deuxième tubulure dans laquelle passait un tube de verre pour l'amenée d'un gaz de balayage, l'extrémité dudit tube étant située deux centimètres environ au-dessus de la surface libre du soufre liquide, et d'une troisième tubulure permettant l'injection du catalyseur et également le prélèvement d'échantillons de soufre liquide, ledit ballon présentant en outre une sortie pour les gaz prolongée par un conduit d'évacuation traversant un système de piégeage de l'$H_2S$.

Dans le ballon on plaçait 1 kg de soufre liquide prélevé à la sortie du condenseur d'unité à soufre et maintenait ce soufre à une température égale à 140°C (exemples 1 à 3) ou 150°C (exemple 4). A partir d'un instant pris comme origine des temps, on introduisait dans le ballon d'une part, par le tube plongeur, 510/h d'azote à titre de gaz de strippage et d'autre part, par le tube de balayage, 1210/h d'air comme gaz de balayage et l'on évacuait du ballon, par le conduit approprié, 1710/h d'effluent gazeux que l'on dirigeait vers le système de piégeage. A intervalles déterminés, on prélevait des échantillons de soufre liquide et do-

sait l'$H_2S$ et les sulfanes qu'ils renfermaient encore par argentimétrie ou iodométrie. Le point d'équivalence de la réaction de dosage était détecté par potentiométrie à intensité imposée en utilisant des électrodes bimétalliques.

Le résultat du dosage, désigné par "$H_2S$ total", représentait la somme des teneurs du soufre liquide respectivement en $H_2S$ libre et en $H_2S$ combiné sous la forme de sulfanes.

Dans les exemples 2 et 3, le catalyseur ou l'additif était introduit dans le ballon, au moyen d'une microseringue à travers un septum obturant la troisième tubulure du ballon, à l'instant choisi comme origine des temps, la quantité de catalyseur ou d'additif représentant 50 ppm en poids par rapport au soufre liquide. Dans l'exemple 4, on effectuait deux injections de 25 ppm d'ammoniac dans le soufre liquide, par addition au gaz de stripage, la première à l'instant origine et la seconde au bout d'une heure.

Les résultats obtenus sont consignés dans le tableau 1.

TABLEAU I

| EXEMPLE | SYSTEME CATALYTIQUE ou ADDITIF | DUREE DU TRAITEMENT (mn) | TENEUR EN "$H_2S$ TOTAL" DU SOUFRE LIQUIDE (ppm) |
|---|---|---|---|
| 1 | AUCUN | 0 | 145 |
| | | 30 | 133 |
| | | 60 | 120 |
| | | 90 | 113 |
| | | 120 | 103 |
| 2 | Na OH en solution à 3 % en poids dans le n-décanol | 0 | 136 |
| | | 30 | 128 |
| | | 60 | 118 |
| | | 90 | 108 |
| | | 120 | 96 |
| 3 | TDM.7 (O.E) * | 0 | 158 |
| | | 30 | 141 |
| | | 60 | 126 |
| | | 90 | 115 |
| | | 120 | 85 |
| 4 | $NH_3$ | 0 | 465 |
| | | 60 | 284 |
| | | 120 | 132 |
| | | 240 | 18 |
| | | 300 | 9,5 |

* TDM.7 (O.E) = Tertiododécylmercaptan oxyéthyléné renfermant 7 motifs ($OCH_2CH_2$).

EXEMPLES 5 A 10 :

Dans ces exemples, on effectuait l'élimination de l'$H_2S$ contenu dans du soufre liquide provenant d'un condenseur d'une unité à soufre CLAUS en utilisant un système catalytique suivant l'invention du type bicomposante.

On opérait dans un dispositif analogue à celui utilisé dans les exemples témoins et en travaillant à 140°C (exemples 5 à 8) ou 150°C (exemples 9 et 10) avec un débit de gaz de stripage égal à 60 l/h (exemples 5 à 8) ou 100 l/h (exemples 9 et 10), le débit de gaz de balayage étant égal à 120l/h pour les divers exemples et les quantités de système catalytique variant d'un exemple à l'autre.

La nature et la quantité du système catalytique utilisé dans chacun des exemples ainsi que les résultats obtenus sont rassemblés dans le tableau II.

La comparaison des résultats des exemples 5 à 8 à ceux des exemples témoins met en évidence l'efficacité du système catalytique bicomposante suivant l'invention, qui permet d'atteindre des teneurs en "$H_2S$ total" dans le soufre liquide inférieures à 10 ppm au bout d'une durée de traitement substantiellement plus courte que celle nécessaire en utilisant un catalyseur basique seul (exemple témoins 2 et 4) ou un composé tensioactif non basique seul (exemple 3).

TABLEAU II

| EXEMPLE | SYSTEME CATALYTIQUE (Nature et Quantité) | DUREE DU TRAITEMENT (mn) | TENEUR EN "$H_2S$ TOTAL" DU SOUFRE LIQUIDE (ppm) |
|---|---|---|---|
| 5 | TDM.7 (OE) contenant 3 % en poids de NaOH 50 ppm | 0<br>15<br>30<br>45 | 135<br>55<br>7<br><1 |
| 6 | TDM.7 (OE) contenant 3 % en poids de NaOH 25 ppm | 0<br>15<br>30<br>45<br>60 | 160<br>80<br>13<br>7<br><1 |
| 7 | TDM.7 (OE) contenant 3 % en poids de NaOH 25 ppm | 0<br>30<br>60 | 702<br>33<br><2 |
| 8 | Nonylphénol.7 (OE)* contenant en solution 0,6% en poids de NaOH 30 ppm | 0<br>15<br>30<br>40<br>45 | 150<br>74<br>25<br>9<br>5 |
| 9 | TDM.7 (OE) contenant 3 % en poids de NaOH 46 ppm | 0<br>10<br>30<br>70<br>95<br>120 | 473<br>263<br>67<br>31<br>18<br>8,5 |
| 10 | Nonylphénol.7 (OE)* contenant en solution 0,6 % en poids de NaOH 50 ppm | 0<br>10<br>20<br>30 | 469<br>56<br>10<br><2 |

* Nonylphénol éthoxylé renfermant 7 motifs ($OCH_2CH_2$).

EXEMPLES 11 A 21 :

Dans ces exemples, on effectuait l'élimination de l'$H_2S$ contenu dans du soufre liquide provenant d'un condenseur d'une unité à soufre CLAUS en utilisant un système catalytique suivant l'invention du type monocomposante.

On opérait dans un dispositif analogue à celui utilisé dans les exemples témoins avec des débits de gaz de stripage et de gaz de balayage égaux respectivement à 100 l/h et 120 l/h, la nature et la quantité du système catalytique ainsi que la température du traitement variant d'un exemple à l'autre.

Les systèmes catalytiques monocomposantes utilisés dans les différents exemples étaient choisis parmi les composés tensioactifs aminés suivants (noms commerciaux entre parenthèses) :

A)- Suif propylène diamine, de formule $R-NH-(CH_2)_3-NH_2$ avec R représentant un radical aliphatique en $C_{14}$ à $C_{20}$ (DINORAM S)

B)- N, N', N'-polyoxyéthylène N-suif propylène diamine,

de formule 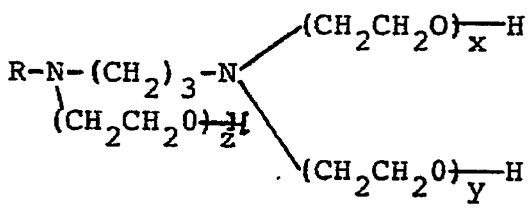 (DINORAM S 7)

avec R désignant un radical aliphatique en $C_{14}$ à $C_{20}$ et $x + y + z = 7$

C)- Polyoxyéthylène suif amine, de formule

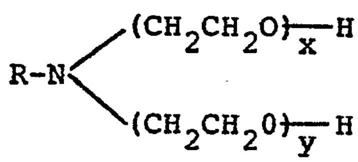 (NORAMOX S 7)

avec R représentant un radical aliphatique en $C_{14}$ à $C_{20}$ et $(x + y) = 7$

D)- Polyoxyéthylène suif amine, de formule analogue à celle définie sous C) mais avec $x + y = 5$ (NORAMOX S 5)

E)- N-bis hydroxy-2 éthyl cocoamine, de formule

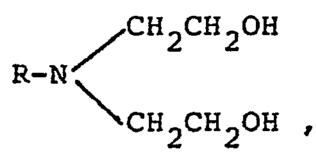

avec R représentant un radical aliphatique en $C_{10}$ à $C_{18}$ (NORAMOX C2)

F)- Di-cocométhylamine, de formule

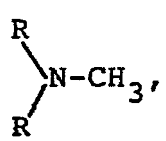

avec R représentant un radical aliphatique en $C_{10}$ à $C_{18}$ (NORAM M2C)

G)- Chlorure de di (suif hydrogéné) diméthylammonium, de

formule 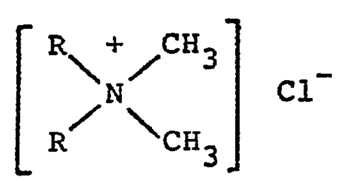 (NORAMIUM M2SH)

avec R désignant un radical alcoyle en $C_{16}$ à $C_{18}$

H)- Chlorure de diméthylbenzalconium, de formule

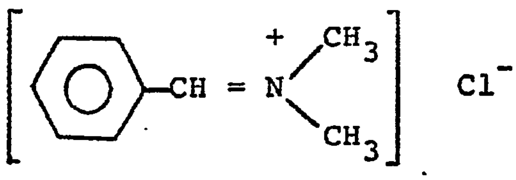

Les conditions opératoire spécifiques aux divers exemples et les résultats obtenus sont regroupés dans le Tableau III.

La comparaison des résultats des exemples 11 à 21 à ceux des exemples témoins met également en évidence l'efficacité du système catalytique suivant l'invention sous sa forme monocomposante, qui conduit à des durées de traitement très courtes pour amener la teneur en "$H_2S$ total" du soufre liquide en-dessous de 10 ppm.

TABLEAU III

| EXEMPLE | SYSTEME CATALYTIQUE (Nature et Quantité) | TRAITEMENT Température (°C) | Durée (mn) | TENEUR EN "$H_2S$ TOTAL" DU SOUFRE LIQUIDE (ppm) |
|---|---|---|---|---|
| | | | 0 | 452 |
| 11 | A | 135 | 6 | 33 |
| | 53 ppm | | 18 | 4 |
| | | | 20 | <2 |
| | | | 0 | 450 |
| 12 | B | 135 | 4 | 68 |
| | 46 ppm | | 15 | <2 |
| | | | 0 | 477 |
| 13 | C | 135 | 4 | 83 |
| | 49 ppm | | 12 | 8 |
| | | | 20 | <1 |
| | | | 0 | 534 |
| 14 | D | 135 | 4 | 106 |
| | 30 ppm | | 10 | 24 |
| | | | 17 | <2 |
| | | | 0 | 504 |
| 15 | D | 150 | 4 | 182 |
| | 30 ppm | | 12 | 48 |
| | | | 19 | 24 |
| | | | 32 | <2 |
| | | | 0 | 504 |
| 16 | D | | 4 | 274 |
| | 30 ppm | 165 | 12 | 173 |
| | | | 30 | 122 |
| | | | 55 | 78 |
| | | | 168 | <2 |

TABLEAU III (suite)

| EXEMPLE | SYSTEME CATALYTIQUE (Nature et Quantité) | TRAITEMENT Température (°C) | TRAITEMENT Durée (mn) | TENEUR EN "$H_2S$ TOTAL" DU SOUFRE LIQUIDE (ppm) |
|---|---|---|---|---|
| | | | 0 | 458 |
| 17 | D | 135 | 10 | 19 |
| | 9 ppm | | 20 | $<2$ |
| | | | 0 | 508 |
| 18 | E | 150 | 5 | 103 |
| | 30 ppm | | 13 | 20 |
| | | | 22 | $<2$ |
| | | | 0 | 529 |
| 19 | F | 150 | 5 | 111 |
| | 46 ppm | | 13 | 25 |
| | | | 20 | 4 |
| | | | 22 | $<2$ |
| | | | 0 | 451 |
| 20 | G | 150 | 6 | 184 |
| | 30 ppm | | 15 | 30 |
| | | | 21 | 10 |
| | | | 30 | $<2$ |
| | | | 0 | 510 |
| 21 | H | 150 | 12 | 50 |
| | 39 ppm | | 20 | 8 |
| | | | 25 | $<2$ |

**Revendications**

1 - Procédé pour l'élimination rapide de l'$H_2S$ présent dans le soufre liquide à l'état simplement dissous et à l'état combiné de polysulfures d'hydrogène, du type dans lequel on incorpore au soufre liquide un système catalytique renfermant un ou plusieurs composés à caractère basique et l'on maintient le tout dans des conditions propres à évacuer l'$H_2S$ hors du soufre liquide, et se caractérisant en ce que ledit système catalytique inclut également un ou plusieurs composés tensioactifs.

2 - Procédé selon la revendication 1, caractérisé en ce que la composante du système catalytique consistant en le ou les composés à caractère basique et la composante formée du ou des composés tensioactifs sont ajoutées au soufre liquide soit séparément soit sous la forme d'un mélange.

3 - Procédé selon la revendication 1 ou 2, caractérisé en ce que la composante à caractère basique et la composante tensioactive associées pour former le système catalytique sont utilisées en proportions

telles que la quantité de composante à caractère basique représente 0,05 à 50 % et de préférence 0,2 à 20 % du poids total desdites composantes.

4 - Procédé selon l'une des revendications 1 à 3, caractérisé en ce que les composés tensioactifs formant la composante tensioactive du système catalytique sont choisis parmi les composés tensioactifs n'ayant pas ou pratiquement pas de caractère basique.

5 - Procédé selon la revendication 4, caractérisé en ce que les composés tensioactifs formant la composante tensioactive du système catalytique sont choisis parmi les mercaptans oxyéthylénés, les phénols oxyéthylénés, les esters de polyéthylène glycol, les dérivés des oxyalcoylamides et les polyéthoxyesters des corps gras.

6 - Procédé selon la revendication 1, caractérisé en ce que le système catalytique incorporé au soufre liquide est mono-composante et consiste en un ou plusieurs composés, qui ont chacun à la fois un caractère basique et des propriétés tensioactives.

7 - Procédé selon la revendication 6, caractérisé en ce que le système catalytique monocomposante incorporé au soufre liquide est formé d'un ou plusieurs composés tensioactifs aminés.

8 - Procédé selon la revendication 7, caractérisé en ce que les composés tensioactifs aminés formant le système catalytique monocomposante sont choisis parmi les amines grasses, les alcoylènediamines grasses, les sels et en particulier les chlorhydrates et carboxylates de telles amines et diamines grasses, les dérivés oxyalcoylénés de ces amines et diamines grasses et de leurs sels, les composés d'ammonium quaternaires à chaînes grasses et les sels de benzalconium.

9 - Procédé selon la revendication 7, caractérisé en ce que les composés tensioactifs aminés formant le système catalytique monocomposante sont choisis parmi :

- les amines grasses de formule

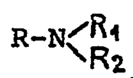

et leurs sels, notamment chlorhydrates et carboxylates,

- les alcoylènediamines à chaînes grasses de formule $R\text{-}NH\text{-}(C_mH_{2m})\text{-}NH_2$ et leurs sels, notamment chlorhydrates et carboxylates,

- les dérivés oxyalcoylénés d'amines grasses et d'alcoylènediamines grasses de formules respectives

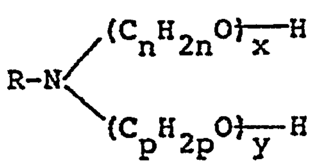

et

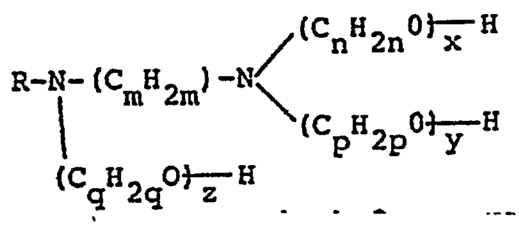

- les composés d'ammonium quaternaires à chaînes grasses de formule

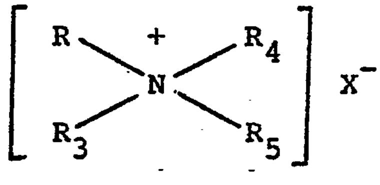

, et

- les sels de benzalconium de formule

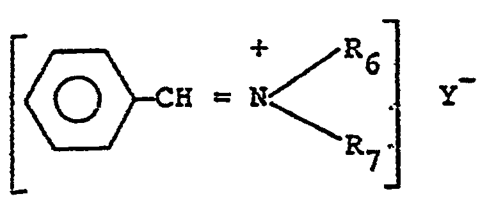

avec dans ces formules R représentant un radical alcoyle ou alcényle en $C_8$ à $C_{22}$, $R_1$ et $R_2$, identiques ou différents, désignant chacun un radical R, un atome d'hydrogène ou un radical alcoyle en $C_1$ à $C_4$, $R_3$ à $R_5$, identiques ou différents, représentant chacun un radical R ou un radicalalcoyle en $C_1$ à $C_4$, $R_6$ et $R_7$, identiques ou différents, désignant un radical alcoyle en $C_1$ à $C_4$, m, n, p et q représentant des nombres entiers allant de 1 à 4, x, y et z étant des nombres allant chacun de 1 à 10 et $X^-$ et $Y^-$ désignant des anions salifiants, notamment C1 $^-$ou carboxylates et par exemple acétate.

10. Procédé selon la revendication 9, caractérisé en ce que les dérivés oxyalcoylénés d'amines grasses et d'alcoylène-diamines grasses répondent aux formules

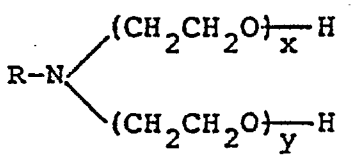

et

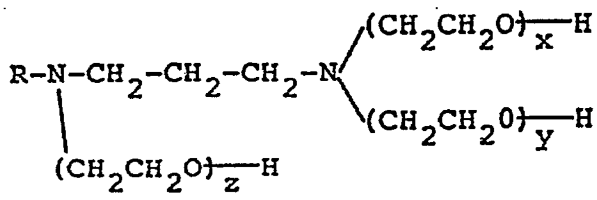

11. Procédé selon l'une des revendications 1 à 10, caractérisé en ce que la quantité de système catalytique monocomposante ou bicomposante incorporée au soufre liquide est comprise entre environ 0,5 et 60 ppm comptés en poids du soufre.

12. Procédé selon l'une des revendications 1 à 11, caractérisé en ce que la mise en contact du soufre liquide avec le système catalytique est réalisée à une température comprise entre 130°C et 165°C.

13. Procédé selon l'une des revendications 1 à 12, caractérisé en ce que le soufre liquide renfermant le système catalytique est soumis à une agitation, ladite agitation étant en particulier réalisée par des moyens mécaniques d'agitation, par pulvérisation du soufre liquide, ou encore par injection d'un gaz inerte, jouant le rôle de gaz de stripage, dans la masse de soufre ou bien par une combinaison de ces techniques.

14. Procédé selon la revendication 13, caractérisé en ce que l'on balaie en outre la surface libre du soufre liquide renfermant le système catalytique à l'aide d'un gaz inerte dans les conditions d'opération.

15. Composition formée d'un mélange, d'une part, de soufre liquide renfermant de l'$H_2S$ à l'état simplement dissous et à l'état combine de polysulfures d'hydrogène, et, d'autre, d'un système catalytique du type comportant une composante consistant en un ou plusieurs composés à caractère basique, caractérisée en ce que ledit système catalytique inclut également une composante tensioactive formée d'un ou plusieurs composés tensioactifs.

16. Composition selon la revendication 15, caractérisée en ce que la composante basique et la composante tensioactive du système catalytique sont associées en proportions telles que la quantité de composante basique représente 0,05 à 50% et de préférence 0,2 à 20% du poids total desdites composantes.

17. Composition selon la revendication 15 ou 16, caractérisée en ce que les composés tensioactifs formant la composante tensioactive du système catalytique n'ont pas ou pratiquement pas de caractère basique.

18. Composition selon la revendication 17, caractérisée en ce que les composés tensioactifs formant la composante tensioactive du système catalytique sont choisis parmi les mercaptans oxyéthylénés, les phénols oxyéthylénés, les esters de polyéthylène glycol, les dérivés des oxyalcoylamides et les polyéthoxyesters des corps gras.

19. Composition selon la revendication 15, caractérisée en ce que le système catalytique qu'elle renferme est monocomposante, ledite composante consistant en un ou plusieurs composés, qui ont chacun à la fois un caractère basique et des propriété tensioactives.

20. Composition selon la revendication 19, caractérisée en ce que le système catalytique monocomposante consiste en un ou plusieurs composés tensioactifs amines.

21. Composition selon la revendication 20, caractérisée en ce que les composes aminés qu'elle renferme sont choisis parmi les amines grasses, les alcoylènediamines grasses, les sels et notamment les chlorhydrates et carboxylates de telles amines et diamines grasses, les dérivés oxyalcoylénés de ces amines et diamines grasses et de leurs sels, les composes d'ammonium quaternaires à chaines grasses et les sels de benzalconium.

22. Composition selon la revendication 21, caractérisée en ce que les composés tensioactifs aminés qu'elle renferme sont choisis parmi

– les amines grasses de formule

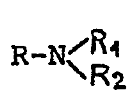

et leurs sels, notamment chlorhydrates et carboxylates,

– les alcoylènediamines à chaînes grasses de formule R-NH-($C_mH_{2m}$)-$NH_2$ et leurs sels, notamment chlorhydrates et carboxylates,

– les dérivés oxyalcoylénés d'amines grasses et d'alcoylènediamines grasses de formules respectives

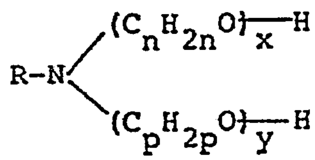

et

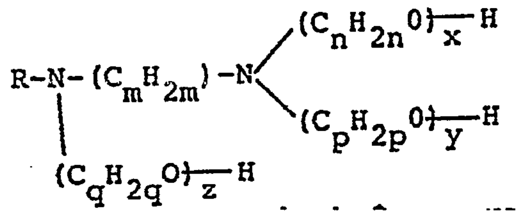

– les composés d'ammonium quaternaires à chaînes grasses de formule

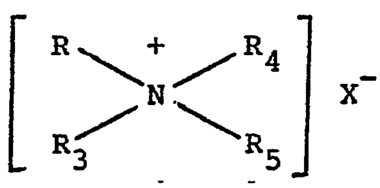

, et

– les sels de benalconium de formule

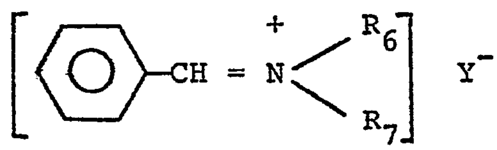

avec dans ces formules R représentant un radical alcoyle ou alcényle en $C_8$ à $C_{22}$, $R_1$ et $R_2$, identiques ou différents, désignant chacun un radical R, un atome d'hydrogène ou un radical alcoyle en $C_1$ à $C_4$, $R_3$ a $R_7$, identiques ou différents, représentant chacun un radical R ou un radical alcoyle en $C_1$ à $C_4$, $R_6$ et $R_7$, identiques ou différents, désignant un radical alcoyle en $C_1$ à $C_4$, m, n, p et q représentant des nombres entiers allant de 1 à 4, x, y et z étant des nombres allant chacun de 1 à 10 et $X^-$ et $Y^-$ désignant des anions salifiants, notamment $C1^-$ ou carboxylates et par exemple acétate.

23. Composition selon la revendication 21, caractérisée en ce que les dérivés oxyalcoylénés d'amines grasses et d'alcoylènediamines grasses répondent respectivement aux formules

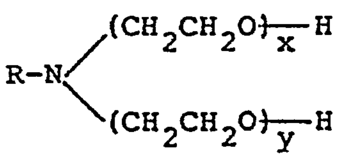

et

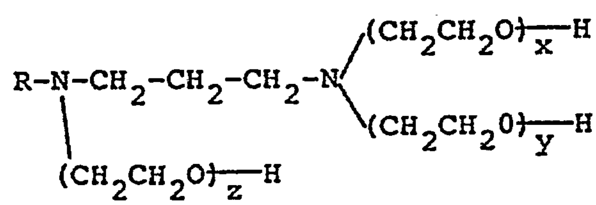

dans lesquelles R représente un radical alcoyle ou alcényle en $C_8$ à $C_{22}$ et x, y et z sont des nombres allant chacun de 1 à 10.

24. Composition selon l'une des revendications 15 à 23, caractérisée en ce qu'elle renferme une quantité de système catalytique comprise entre 0,5 et 60 ppm en poids du soufre.

**Patentansprüche**

1. Verfahren zur raschen Entfernung von Schwefelwasserstoff, der in flüssigem Schwefel einfach in gelöster Form oder in Form von Polyschwefelwasserstoffen vorliegt, wobei man dem flüssigen Schwefel ein katalytisches System zuführt, das eine oder mehrere basische Verbindungen umfaßt, und das Ganze unter geeigneten Bedingungen hält, um den Schwefelwasserstoff vom flüssigen Schwefel abzutrennen, dadurch gekennzeichnet , daß das katalytische System gleichermaßen eine oder mehrere oberflächenaktive Verbindungen enthält.

2. Verfahren nach Anspruch 1, dadurch gekennzeichnet , daß die aus der oder den basischen Verbindungen bestehende Komponente des katalytischen Systems und die aus der oder den oberflächenaktiven Verbindungen bestehende Komponente dem Schwefel entweder getrennt oder als Mischung zugefügt werden.

3. Verfahren nach Anspruch 1 oder 2, dadurch gekennzeichnet , daß die zur Bildung des katalytischen Systems verbundenen basischen und oberflächenaktiven Komponenten in solchen Verhältnissen verwendet werden, daß die Menge der basischen Komponente 0,05 bis 50%, vorzugsweise 0,2 bis 20 % des Gesamtgewichts der besagten Komponenten darstellt.

4. Verfahren nach einem der Ansprüche 1 bis 3, dadurch g e k e n n z e i c h n e t , daß die die oberflächenaktive Komponente des katalytischen Systems bildenden oberflächenaktiven Verbindungen ausgewählt sind aus den oberflächenaktiven Verbindungen, die nicht oder praktisch nicht basisch sind.

5. Verfahren nach Anspruch 4, dadurch g e k e n n z e i c h n e t , daß die die oberflächenaktive Komponente des katalytischen Systems bildenden oberflächenaktiven Verbindungen ausgewählt sind aus den Oxyethylenmerkaptanen, Oxyethylenphenolen, den Polyethylenglykolestern, den Oxyalkylamidderivaten und den Polyethoxyestern von Fettanteilen.

6. Verfahren nach Anspruch 1, dadurch g e k e n n z e i c h n e t , daß das dem flüssigen Schwefel zugeführte katalytische System eine Monokomponente ist und aus einer oder mehreren Verbindungen besteht, die jeweils gleichzeitig basisch sind und oberflächenaktive Eigenschaften besitzen.

7. Verfahren nach Anspruch 6, dadurch g e k e n n z e i c h n e t , daß das dem flüssigen Schwefel zugeführte katalytische Monokomponentensystem aus einer oder mehreren oberflächenaktiven Aminverbindungen gebildet wird.

8. Verfahren nach Anspruch 7, dadurch g e k e n n z e i c h n e t , daß die das katalytische Monokomponentensystem bildenden oberflächenaktiven Aminverbindungen ausgewählt sind aus den Fettaminen, den Fettalkylendiaminen, den Salzen und insbesondere den Chlorhydraten und Carboxylaten dieser Amine und Fettdiamine, den Oxyalkylenderivaten dieser Amine und Fettdiamine und deren Salzen, den fettkettigen quaternären Ammoniumverbindungen und den Benzalkoniumsalzen.

9. Verfahren nach Anspruch 7, dadurch g e k e n n z e i c h n e t , daß die das katalytische Monokomponentensystem bildenden oberflächenaktiven Aminverbindungen ausgewählt sind aus:

– den Fettaminen der Formel

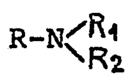

und deren Salzen, vor allem Chlorhydraten und Carboxylaten,

– den fettkettigen Alkylendiaminen der Formel $R\text{-}NH\text{-}(C_mH_{2m})\text{-}NH_2$ und deren Salzen, vor allem Chlorhydraten und Carboxylaten,

– den Oxyalkylenderivaten der Fettamine und der Fettalkylendiamine mit den jeweiligen Formeln

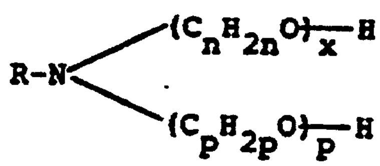

und

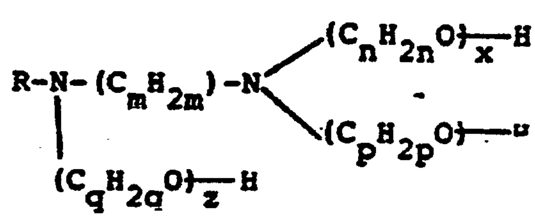

– den fettkettigen quaternären Ammoniumverbindungen der Formel

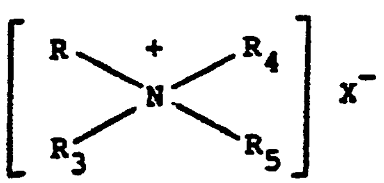

und

– den Benzalkoniumsalzen der Formel

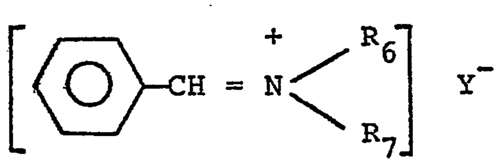

wobei R in diesen Formeln einen $C_8$–$C_{22}$ Alkyl- oder Alkenylrest darstellt, $R_1$ und $R_2$, identisch oder verschieden, jeweils ein Radikal R, ein Wasserstoffatom oder einen $C_1$–$C_4$ Alkylrest bezeichnen, $R_3$–$R_5$, identisch oder verschieden, jeweils ein Radikal R oder einen $C_1$–$C_4$ Alkylrest darstellen, $R_6$ und $R_7$, identisch oder verschieden, einen $C_1$–$C_4$ Alkylrest bezeichnen, m, n, p und q ganze Zahlen von 1 bis 4 darstellen, x, y und z Zahlen sind, die jeweils von 1 bis 10 gehen, und $X^-$ und $Y^-$ salzbildende Anionen darstellen, vor allem C1 $^-$oder Carboxylate und beispielsweise Acetat.

10. Verfahren nach Anspruch 9, dadurch g e k e n n z e i c h n e t , daß die Oxyalkylenderivate der Fettamine und de Fettalkylendiamine den Formeln

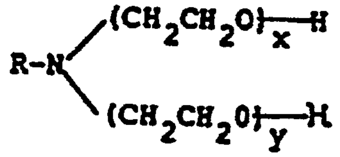

und

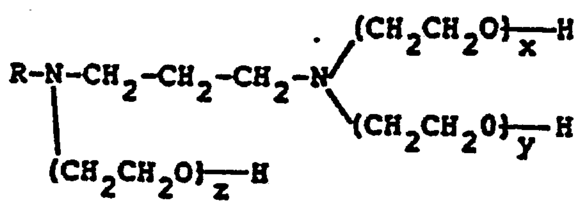

entsprechen.

11. Verfahren nach einem der Ansprüche 1 bi 10, dadurch g e k e n n z e i c h n e t , daß die dem flüssigen Schwefel zugeführte Menge an katalytischem Mono- oder Bikomponentensystem zwischen etwa 0,5 und 60 ppm des Gewichts des Schwefels, beträgt.

12. Verfahren nach einem der Ansprüche 1 bis 11, dadurch g e k e n n z e i c h n e t , daß die Kontaktierung des flüssigen Schwefels mit dem katalytischen System bei einer Temperatur zwischen 130°C und 165°C durchgeführt wird.

13. Verfahren nach einem der Ansprüche 1 bis 12, dadurch g e k e n n z e i c h n e t , daß der das katalytische System enthaltende flüssige Schwefel gerührt wird, und zwar insbesondere mit Hilfe von mechanischen Rührvorrichtungen, durch Zerstäubung des flüssigen Schwefels oder außerdem durch Einspritzen eines Inertgases, das die Rolle eines Strippergases spielt, in die Schwefelmasse oder durch Kombination dieser Techniken.

14. Verfahren nach Anspruch 13, dadurch g e k e n n z e i c h n e t , daß man außerdem die freie Oberfläche des das katalytische System enthaltenden flüssigen Schwefels mit Hilfe eines unter den Betriebsbedingungen inerten Gases spült.

15. Zusammensetzung aus einer Mischung, zum einen aus flüssigem Schwefel, der Schwefelwasserstoff einfach in gelöster Form und in Form von Polyschwefelwasserstoffen enthält, und zum anderen aus einem katalytischen System, wobei dieses eine aus einer oder mehrereren basischen Verbindungen bestehende Komponente beinhaltet, dadurch g e k e n n z e i c h n e t , daß das besagte katalytische System gleichermaßen eine aus einem oder mehreren oberflächenaktiven Verbindungen gebildete oberflächenaktive Komponente enthält.

16. Zusammensetzung nach Anspruch 15, dadurch g e k e n n z e i c h n e t , daß die basische und die oberflächenaktive Komponente des katalytischen Systems in solchen Verhältnissen verbunden werden, daß die Menge der basischen Komponente 0,05 bis 50%, vorzugsweise 0,2 bis 20% des Gesamtgewichts der Komponenten darstellt.

17. Zusammensetzung nach Anspruch 15 oder 16, dadurch g e k e n n z e i c h n e t , daß die die oberflächenaktive Komponente des katalytischen Systems bildenden oberflächenaktiven Verbindungen nicht oder praktisch nicht basisch sind.

18. Zusammensetzung nach Anspruch 17, dadurch g e k e n n z e i c h n e t , daß die die oberflächenaktive Komponente des katalytischen Systems bildenden oberflächenaktiven Verbindungen ausgewählt sind aus den Oxyethylenmerkaptanen, Oxyethylenphenolen, den Polyethylenglykolestern, den Oxyalkylamidderivaten und den Polyethoxyestern von Fettanteilen.

19. Zusammensetzung nach Anspruch 15, dadurch g e k e n n z e i c h n e t , daß das darin enthaltene katalytische System eine Monokomponente ist, wobei die besagte Komponente aus einem oder mehreren Verbindungen besteht, die jeweils gleichzeitig basisch sind und oberflächenaktive Eigenschaften besitzen.

20. Zusammensetzung nach Anspruch 19, dadurch g e k e n n z e i c h n e t , daß das katalytische Monokomponentensystem aus einem oder mehreren oberflächenaktiven Aminverbindungen besteht.

21. Zusammensetzung nach Anspruch 20, dadurch g e k e n n z e i c h n e t , daß die darin enthaltenen Aminverbindungen ausgewählt sind aus den Fettaminen, den Fettalkylendiaminen, den Salzen und insbesondere den Chlorhydraten und Carboxylaten dieser Amine und Fettdiamine, den Oxyalkylenderivaten dieser Amine und Fettdiamine und deren Salzen, den fettkettigen quaternären Ammoniumverbindungen und den Benzalkoniumsalzen.

22. Zusammensetzung nach Anspruch 21, dadurch g e k e n n z e i c h n e t , daß die darin enthaltenen oberflächenaktiven Aminverbindungen ausgewählt sind aus

– den Fettaminen der Formel

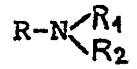

und deren Salzen, insbesondere Chlorhydraten und Carboxylaten,

– den fettkettigen Alkylendiaminen der Formel $R\text{-}NH\text{-}(C_mH_{2m})\text{-}NH_2$ und deren Salzen, insbesondere Chlorhydraten und Carboxylaten,
– den Oxyalkylenderivaten der Fettamine und der Fettalkylendiamine mit den jeweiligen Formeln

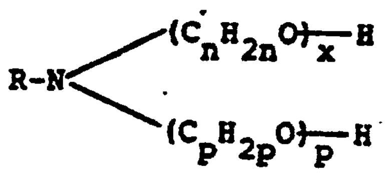

und

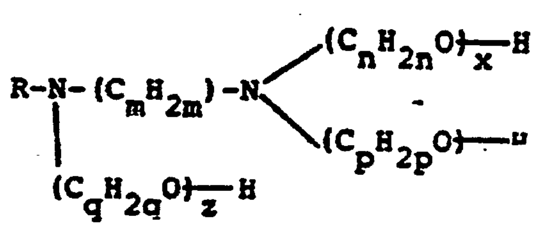

– den fettkettigen quaternären Ammoniumverbindungen der Formel

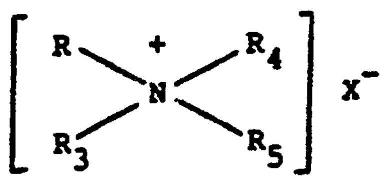

und

– den Benzalkoniumsalzen der Formel

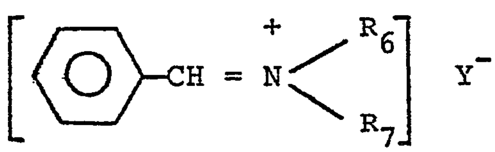

wobei R in diesen Formeln einen $C_8$–$C_{22}$ Alkyl- oder Alkenylrest darstellt, $R_1$ und $R_2$, identisch oder verschieden, jeweils ein Radikal R, ein Wasserstoffatom oder einen $C_1$–$C_4$ Alkylrest bezeichnen, $R_3$–$R_5$, identisch oder verschieden, jeweils ein Radikal R oder einen $C_1$–$C_4$ Alkylrest darstellen, $R_6$ und $R_7$, identisch oder verschieden, einen $C_1$–$C_4$ Alkylrest bezeichnen, m, n, p und q ganze Zahlen von 1 bis 4 darstellen, x, y und z Zahlen sind, die jeweils von 1 bis 10 gehen, $X^-$ und $Y^-$ salzbildende Anionen darstellen, insbesondere $C1^-$ oder Carboxylate und beispielsweise Acetat.

23. Zusammensetzung nach Anspruch 21, dadurch g e k e n n z e i c h n e t , daß die Oxyalkylenderivate der Fettamine und der Fettalkylendiamine jeweils den Formeln

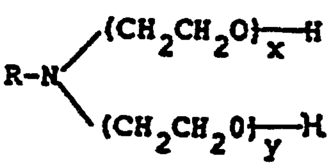

und

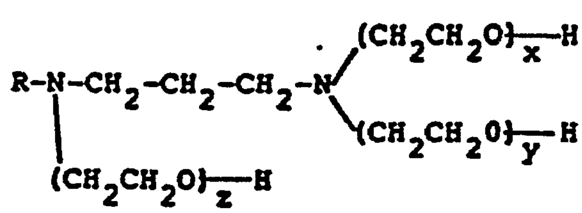

entsprechen, worin R einen $C_8$–$C_{22}$ Alkyl- oder Alkenylrest darstellt, und x, y und z Zahlen von 1 bis 10 sind.

24. Zusammensetzung nach einem der Ansprüche l5 bis 23, dadurch g e k e n n z e i c h n e t , daß die darin enthaltene Menge an katalytischem System zwischen 0,5 und 60 ppm des Gewichts des Schwefels, beträgt.

**Claims**

1. Process for the rapid elimination of $H_2S$ present in liquid sulphur in the simple dissolved state and in the state combined as hydrogen polysulphides, of the type in which a catalytic system comprising one or more basic compounds is incorporated in the liquid sulphur, and the mixture is maintained in conditions suitable for discharging the $H_2S$ out of the liquid sulphur, and characterised in that the said catalytic system also comprises one or more surfactant compounds.

2. Process according to claim 1, characterised in that the catalytic system component consisting of the basic compound or compounds and the component formed by the surfactant compound or compounds are added to the liquid sulphur either separately or in the form of a mixture.

3. Process according to claim 1 or 2, characterised in that the basic component and the surfactant component associated to form the catalytic system are used in proportions such that the amount of basic component represents 0.05 to 50% and preferably 0.2 to 20% of the total weight of the said components.

4. Process according to any one of claims 1 to 3, characterised in that the surfactant compounds forming the surfactant component of the catalytic system are selected from the surfactant compounds which are not, or substantially not basic.

5. Process according to claim 4, characterised in that the surfactant compounds forming the catalytic system surfactant component are selected from oxyethylene mercaptans, oxyethylene phenols, polyethylene glycol esters, oxyalkylamide derivatives and polyethoxyesters of fatty compounds.

6. Process according to claim 1, characterised in that the catalytic system incorporated in the liquid sulphur is monocomponent and consists of one or more compounds, each of which has both a basic nature and surfactant properties.

7. Process according to claim 6, characterised in that the monocomponent catalytic system incorporated in the liquid sulphur is formed from one or more amine surfactant compounds.

8. Process according to claim 7, characterised in that the amine surfactant compounds forming the monocomponent catalytic system are selected from fatty amines, fatty alkylene diamines, salts and in particular hydrochlorides and carboxylates of such fatty amines and diamines, the oxyalkylene derivatives of these fatty amines and diamines and salts thereof, quaternary ammonium compounds with fatty chains and benzaleonium salts.

9. Process according to claim 7, characterised in that the amine surfactant compounds forming the monocomponent catalytic system are selected from:

– fatty amines having the formula

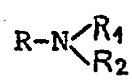

and salts thereof in particular hydrochlorides and carboxylates;

– alkylene diamines with fatty chains having the formula $R\text{-}NH\text{-}(C_mH_{2m})\text{-}NH_2$ and salts thereof in particular hydrochlorides and carboxylates,

– oxyalkylene derivatives of fatty amines and of fatty alkylene diamines having the respective formulae

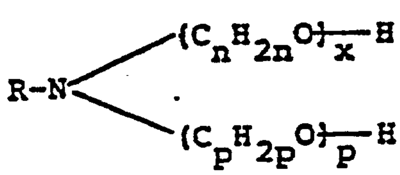

and

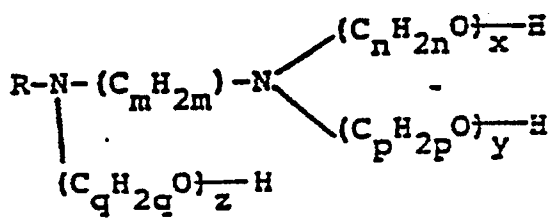

– quaternary ammonium compounds with fatty chains having the formula

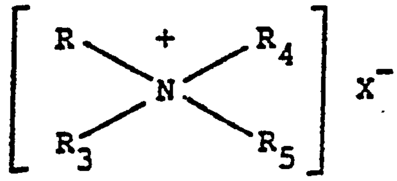

, and

– benzalconium salts having the formula

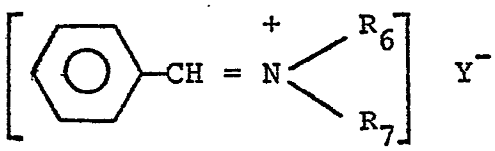

with R in these formulae representing a $C_8$ to $C_{22}$ alkyl or alkylene radical, $R_1$ and $R_2$ being identical or different, each designating an R radical, a hydrogen atom or a $C_1$ to $C_4$ alkylradical, $R_3$ to $R_5$, being identical or different, each representing an R radical or a $C_1$ to $C_4$ alkyl radical, $R_6$ and $R_7$, being identical or different, designating a $C_1$ to $C_4$ alkyl radical, m, n, p and q, representing integers from 1 to 4, x, y and z being numbers from 1 to 10 in each case and $X^-$ and $Y^-$ designating salt-forming anions in particular $C1^-$ or carboxylates, for example acetate.

10. Process according to claim 9, characterised in that the oxyalkylene derivatives of fatty amines and of fatty alkylene diamines correspond to the formula

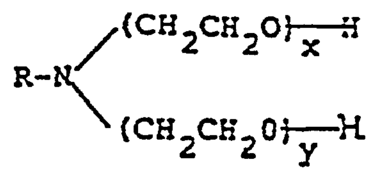

and

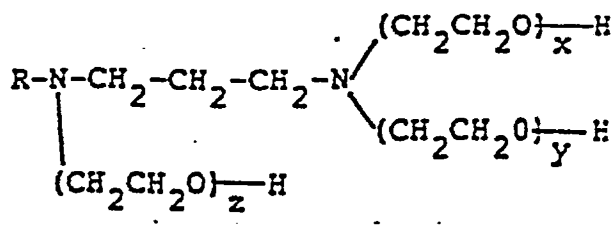

11. Process according to any one of claims 1 to 10, characterised in that the amount of mono or bicomponent catalytic system incorporated in the liquid sulphur is comprised between approximately 0.5 and 60ppm calculated by weight of sulphur.

12. Process according to any one of claims 1 to 11, characterised in that the liquid sulphur is brought into contact with the catalytic system at a temperature between 130°C and 165°C.

13. Process according to any one of claims 1 to 12, characterised in that the liquid sulphur comprising the catalytic system is subjected to agitation, the said agitation being performed in particular by mechanical agitation means, by spraying the liquid sulphur, or by injecting an inert gas, acting as a stripping gas, into the sulphur mass, or by a combination of these techniques.

14. Process according to claim 13, characterised in that the free surface of the liquid sulphur comprising the catalytic system is further swept by means of a gas which is inert in the operating contitions.

15. Composition formed from a mixture, on the one hand, of liquid sulphur containing $H_2S$ in the simple dissolved state and in the state combined as hydrogen polysulphides and on the other hand, of a catalytic system of the type comprising a component consisting of one or a plurality of basic compounds, characterised in that the said catalytic system also includes a surfactant component formed from one or a plurality of surfactant compounds.

16. Composition according to claim 15, characterised in that the basic component and the surfactant component of the catalytic system are combined in proportions such that the amount of basic component represents 0.05 to 50% and preferably 0.2 to 20% of the total weight of the said components.

17. Composition according to claims 15 or 16, characterised in that the surfactant compounds forming the surfactant component of the catalytic system are not, or are substantially not basic.

18. Composition according to claim 17, characterised in that the surfactant compounds forming the surfactant component of the catalytic system are selected from oxyethylene mercaptans, oxyethylene phenols, polyethylene glycol esters, oxyalkylamite derivatives and polyethoxyesters of fatty compounds.

19. Composition according to claim 15, characterised in that the catalytic system which it comprises is monocomponent, consisting of one or a plurality of compounds, each of which has both a basic nature and surfactant properties.

20. Composition according to claim 19, characterised in that the monocomponent catalytic system consists of one or more amine surfactant compounds.

21. Composition according to claim 20, characterised in that the amine compounds which it comprises are selected from fatty amines, fatty alkylene diamines, salts and in particular the hydrochlorides and carboxylates of such fatty amines and diamines, oxyalkylene derivatives of these fatty amine and diamines and salts thereof, quaternary ammonium compounds with fatty chains and benzalconium salts.

22. Composition according to claim 21, characterised in that the amine surfactant compounds which it comprises are selected from:

– fatty amines having the formula

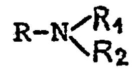

and the salts thereof, in particular hydrochlorides and carboxylates;
– fatty chain alkylene diamines having the formula R-NH-($C_mH_{2M}$)-$NH_2$ and the salts thereof, in particular hydrochlorides and carboxylates;
– oxyalkylene derivatives of fatty amines and of fatty alkylene diamines having the respective formulae

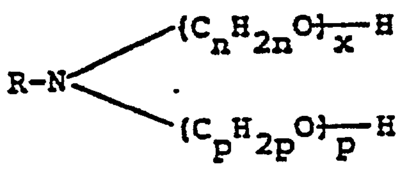

and

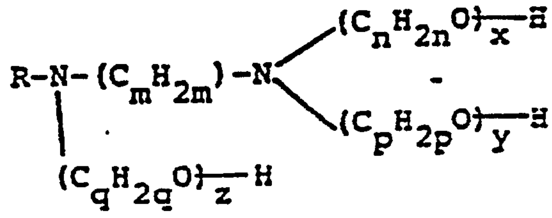

– quaternary ammonium compounds having fatty chains with the formula

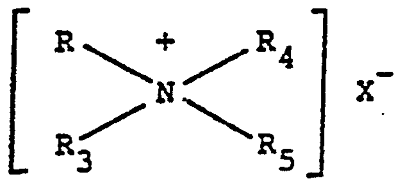

, and

and benzalconium salts having the formula

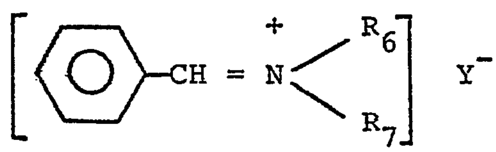

with R in these formulae representing a $C_8$ to $C_{22}$ alkyl or alkylene radical, $R_1$ and $R_2$, being identical or different, each designating an R radical, a hydrogen atom or a $C_1$ to $C_4$ alkyl radical, $R_3$ to $R_5$, being identical or different, each representing an R radical or $C_1$ to $C_4$ alkyl radical, $R_6$ and $R_7$, being identical or different, designating a $C_1$ to $C_4$ alkyl radical, m, n, p and q representing integers from 1 to 4, x, y and z each being numbers from 1 to 10 and $X^-$ and $Y^-$ designating salt forming anions, in particular $C1^-$ or carboxylates and acetate for example.

23. Composition according to claim 21, characterised in that the oxyalkylene derivatives of fatty amines and of fatty alkylene diamines correspond respectively to the formulae

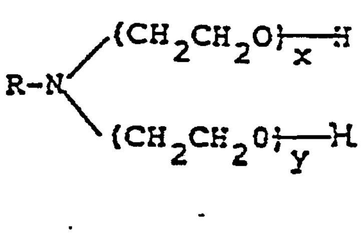

and

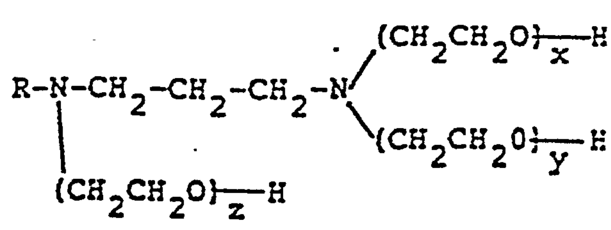

in which R represents a $C_8$ to $C_{22}$ alkyl or alkylene radical and x, y and z are numbers from 1 to 10.

24. Composition according to any one of claims 15 to 23, characterised in that it comprises a quantity of catalytic system of between 0.5 and 60 ppm by weight of sulphur.

Fig. 1

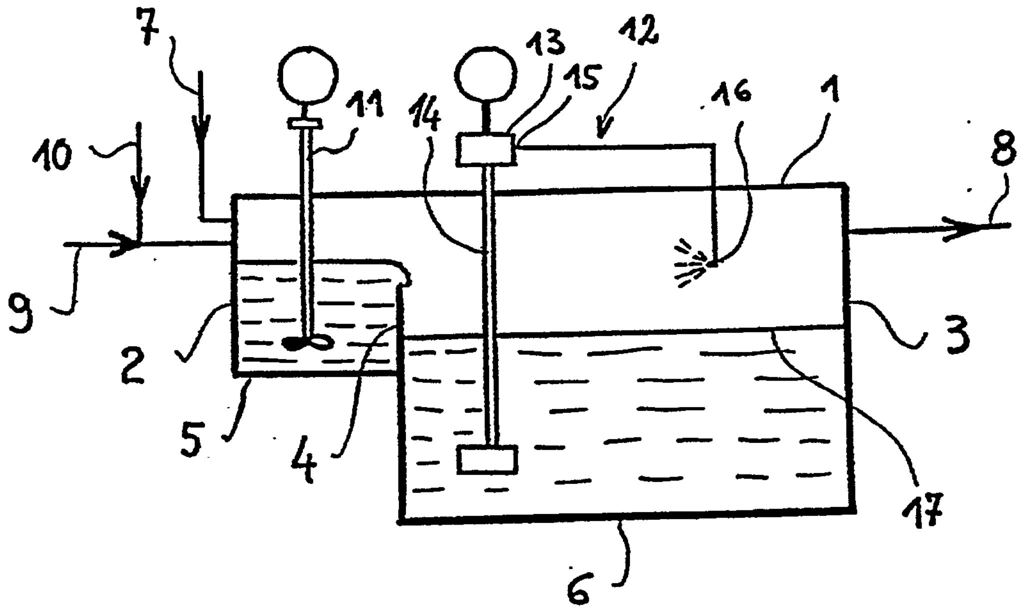
1
2
3
4
5
6
7
8
9
10
11
12
13
14
15
16
17

Fig. 2

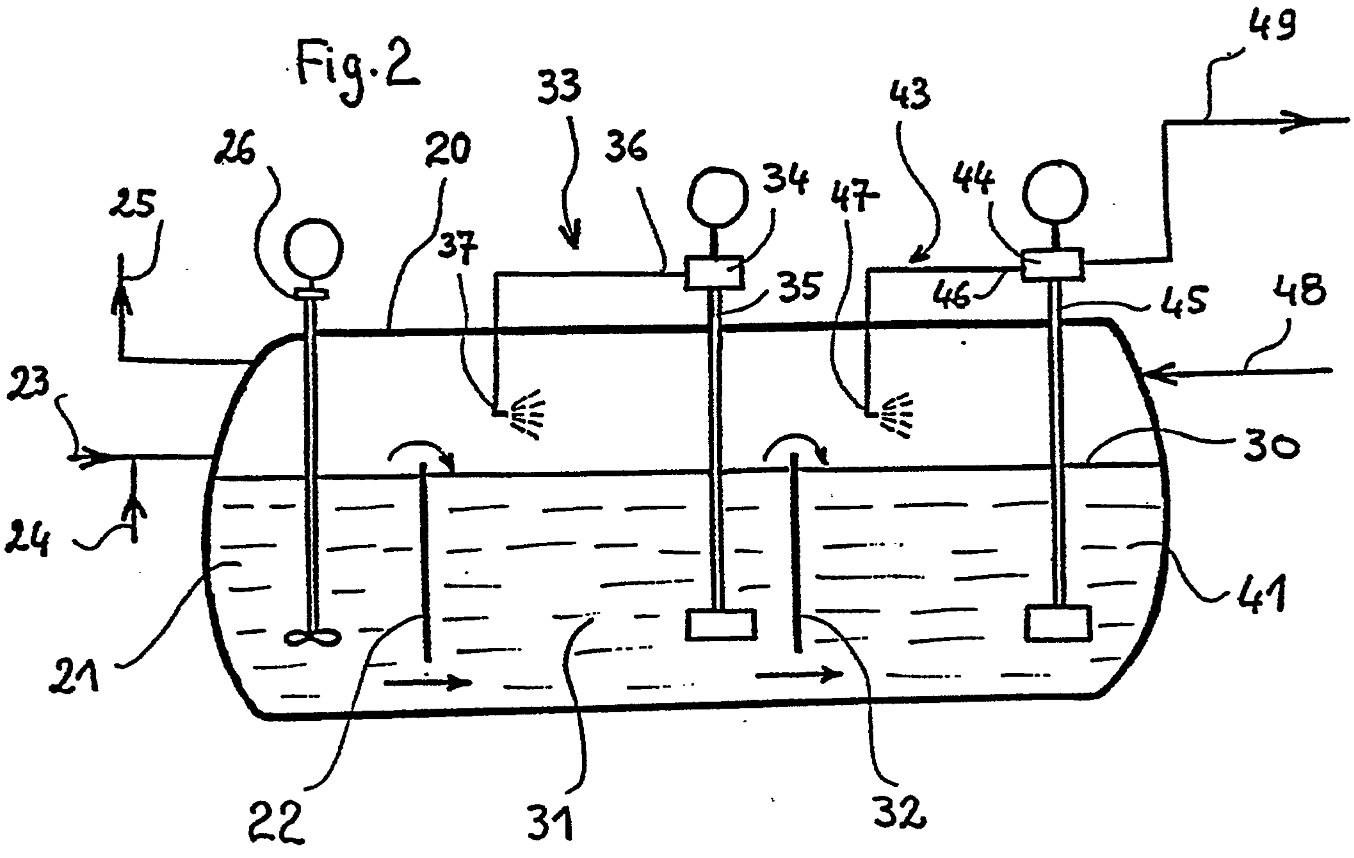
20
21
22
23
24
25
26
30
31
32
33
34
35
36
37
41
43
44
45
46
47
48
49